# EUROPEAN PATENT SPECIFICATION

(11) **EP 2 052 997 B1**
(45) Date of publication and mention of the grant of the patent: **04.05.2011**
(21) Application number: 08152945.5
(22) Date of filing: 18.03.2008
(51) Int. Cl.: B65G 47/31

(54) **A device for reducing misalignment in conveyed products and corresponding method**
Vorrichtung zum Verringern der Fehlausrichtung bei geförderten Produkten und zugehöriges Verfahren
Dispositif de réduction de désalignement dans des produits transportés et procédé correspondant

(30) Priority: 26.10.2007 IT TO20070766
(43) Date of publication of application: 29.04.2009
(73) Proprietor: Soremartec S.A., 6700 Arlon (BE); Ferrero S.p.A., 12051 Alba (Cuneo) (IT); Ferrero Offene Handelsgesellschaft mbH, 60599 Frankfurt am Main (DE)
(72) Inventor: Gnani, Maurizio, 20062 Cassano d'Adda (Milano) (IT); Caviglia, Teresio, 12043 Canale (Cuneo) (IT)
(74) Representative: Bosotti, Luciano

(56) References cited:
- EP-A- 1 666 389
- WO-A-91/08971
- FR-A- 1 362 346
- US-A- 3 463 291

## Description

### Field of the invention

The invention refers to a device and a method according to the preamble of claims 1 and 9 respectively allowing the reduction of misalignment of conveyed products.

The invention was developed with special attention to its possible use in equipment for the automatic packaging of products such as food products.

### Description of the related art

In treating products in the industrial field, and in particular in the automatic packaging industry, the need arises to convey products ordered in ranks that is, in lines formed by products at least approximately aligned transversally with respect to the direction of advancement of the products.

This could be the case of, for example, food products coming from a source such as an oven or a treatment station of various nature (for example, a coating station, etc.) and advancing in files of products aligned in the general advancing direction of the products and lines of products aligned in the direction transversal with respect to the advancing direction, that is, in the state of being ordered in ranks.

However, the products included in each rank could become misaligned. The misalignment can already be present at the source of the rows of products and/or derive, for example, from the fact that the products are moved with conveyors that have curved sections or, in general, sections in which there is a variation of the advancing direction of the products. Different products can interact differently with different portions of the conveyor, so that products originally aligned in a rank loose their alignment.

Instead, a correctly aligned state is a sought-after requisite to discriminate and separate each rank to insure the normal functioning of treatment stations located downstream (for example, flow-pack wrapping machines or the like). These successive working stations can be provided with realignment devices, in some way capable of compensating for the loss of exact alignment of the ranks of the incoming products. However, the intervention capacity of such realigning devices, if present, is not great, and such that they require that the misaligned condition of the product ranks, if not completely absent, is at least reduced.

A solution traditionally used for the realignment of ranks provides for the interposition in the flux of products, in an intermediate condition between successive ranks, of a barrier destined to act as a block for the products of a rank. The barrier allows for the arrest (or at least the slowing down) of the advancing movement of the products enough to allow all of the products of a rank to hit the barrier. Once the desired realignment action is obtained, the barrier is removed from the products, usually by raising it.

This solution suffers from the fundamental inconvenience deriving from the fact that the products hit, and therefore come into contact with, the barrier and can therefore be damaged, in particular when dealing with delicate products such as, for example, food products such as sweet products.

The document FR-A-1 362 346 describes a rank-realigning device essentially composed of a roller transporter (or, possible a belt transporter) interposed between two transporters for arrival and departure of the products respectively. The transporter in question is commanded through a Maltese cross device so to periodically shift from periods of arrest, so to favour the closing up of product ranks in arrival on the transporter itself, and periods of activation in which the transporter transfers an at least partially realigned rank of products onto the downstream transporters. In document EP-A-0 504 237 another device is described that performs a substantially similar function, made of an array of motorised rollers positioned in a cascade and susceptible of being actuated individually so that a region of the conveyor in which the rollers move with a high rotational velocity propagates from one extremity to the opposite extremity of the conveyor in a direction in concordance with the advancing direction of the products on the conveyor itself.

This document discloses a device for reducing the misalignment of ranks of products according to the preamble of claim 1 and a corresponding method according to the preamble of claim 9.

### Object and summary of the invention

The Applicants observe that solutions such as the solution described in the documents cited previously can not be used advantageously, in particular in the field of equipment destined to treat ranks of products advancing at high velocity, for example velocities in the order of 20-25 meters/minute, employing working rhythms that are now very common in equipment for the production and packaging of food products. Such product advancing velocities are actually incompatible with the realisation of an arrest condition of an element of the conveyor.

In addition to this, it is important to have structurally simple solutions available, with contained cost and easy maintenance; these needs lead to the exclusion of the use of devices employing a plurality of rollers with independent motorisation. In addition, it is important to insure that the intervention of the realigning device is, in any case, an improvement on the situation, or at least neutral with respect to the misaligned state that one wishes to correct, in other words, the realignment device should never pose the risk of worsening the misaligned state that one intends to correct.

The object of the present invention is to provide a solution capable of overcoming the inconveniences and fully satisfying the needs referred to previously.

According to the present invention, such an object is achieved by means of a device having the features set forth in the claims that follow. The invention also relates to a corresponding method. The claims are an integral part of the disclosure of the invention provided herein.

### Brief description of the annexed drawings

The invention will now be described, by way of example only, with reference to the enclosed drawings,
wherein:
- figure 1 is a general view in plan of a system for conveying the articles, including a device as described herein,

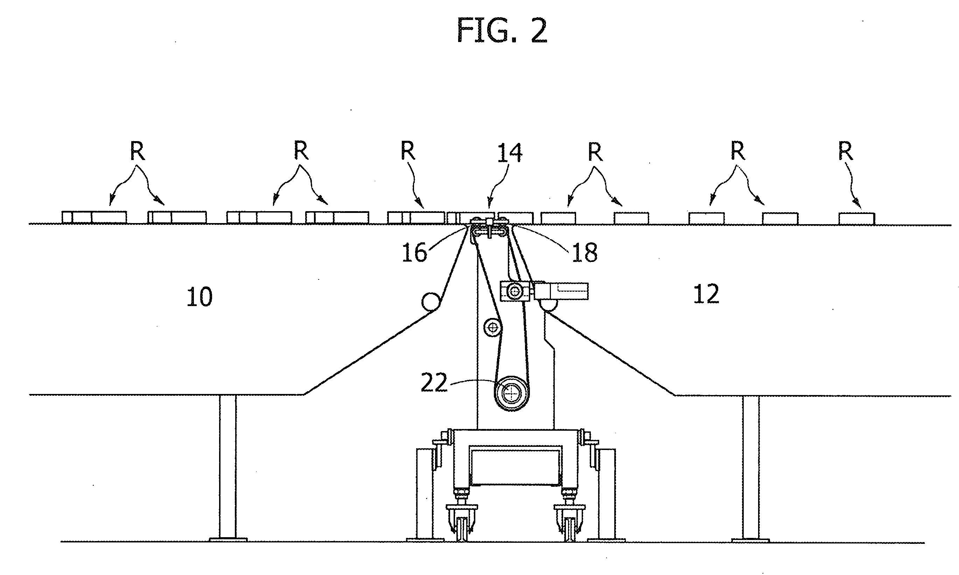

- figure 2 is a general view in lateral elevation of a system for conveying articles, including a device as described herein, and
- figure 3 is a representative diagram of the functioning of a device such as described.

### Detailed description of examples of embodiment

The figures of the annexed drawings represent a portion of an equipment for conveying products P susceptible to being constituted, for example, by food products coming from an oven or from a treatment station such as an coating station (not illustrated in the drawings) and destined to be fed to successive handling stations such as, for example, wrapping stations (these also not represented).

To establish the ideas, this not intended to be limiting, the products P can be constituted by, for example, chocolate-coated baked goods with elongated shapes, for example parallelepiped. Also, in the drawings it is assumed that the products P advance "lengthwise", that is, with their direction of greater extension parallel to the advancing direction of the products P themselves. In any case, the nature of the products P and their orientations are not of specific relevance to the purposes of presenting the solution described herein.

The products P advance (horizontally, from left to right, with reference to the point of view in the figures) in an array in which the successive ranks R of products are recognisable, each rank R being constituted of a line of products P at least roughly aligned in a direction transversal to the advancing direction of the products P themselves.

The term "at least roughly" is applied in particular to products P advancing on an entrance conveyor 10, where it is assumed that there are "disordered" ranks of products, that is, misaligned, when instead it is desired that they arrive in a better condition of alignment on an exit conveyor 12.

The denominations "inlet" and "outlet" refer to the relative positions of the conveyors 10 and 12 with respect to a device 14 which is interposed between the conveyors 10 and 12 to perform a function of at least partial realignment of the ranks R, therefore reducing the dispersion or disorder of the products P included in each rank.

It will also be appreciated that, while the figures of the annexed drawings show the products P on the outlet conveyor 12 in conditions of complete (re)alignment, the function of the device 14 is, in general, that of -- reducing -- the misalignment of the ranks R.

In fact, on one hand, it is possible to use more than one device 14 in succession so to realise successive misalignment reduction actions leading step-by-step to the complete elimination of the misaligned condition.

On the other hand, a single device 14, even if it does not completely eliminating the misalignment, can reduce such misalignment to a level that is completely tolerable for the treatment stations located downstream.

Below in the present description it will be assumed that the conveyors 10 and 12, as well as the device 14, are essentially composed of motorised, closed-loop belt conveyor devices, of the type currently used in conveying equipment, in particular for conveying food products. As such, these conveyors do not require a detailed description herein. It will also be appreciated that the solution described herein is not in any way limited to the use of conveyor devices of this type.

In particular, it is assumed in the following that the entrance conveyor 10, that is for feeding of product P towards the realignment device 14 and the exit conveyor 12, that is for unloading and transporting the products P away from the device 14 itself advance the products with a given advancing velocity. In the following of the present description it will be assumed - for simplicity - that such velocity, indicated with v1, is the same for both the entrance conveyor 10 and the exit conveyor 12. However, in a possible form of embodiment the velocity of the exit conveyor 12 is provided at least slightly higher than the velocity of the entrance conveyor 10: although this possible difference in velocities is not essential for the purpose of understanding the functioning principle of the solution described herein.

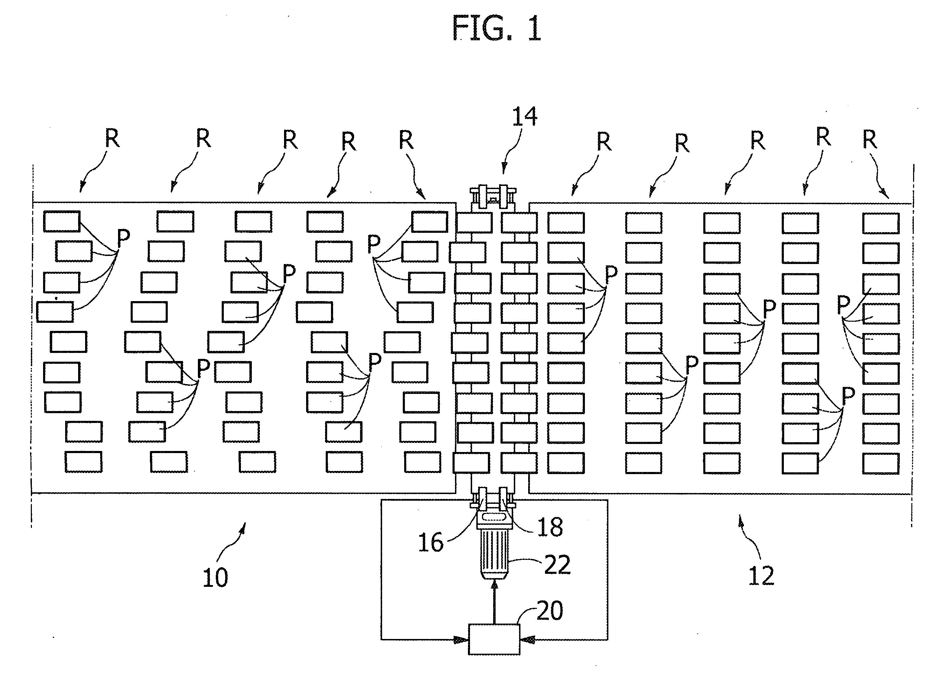

The device 14 is substantially constituted of a conveyor (for example, a conveyor belt) susceptible of being interposed between the conveyors 10 and 12 and having a length approximately the same (if anything, longer, but usually not appreciable shorter) as the length of the products P themselves. The term product length indicates herein the dimension of the products P in the advancing direction on the conveyors 10, 12, and 14 (that is, the horizontal direction in figure 1). By length of the conveyor 14, it is intended here to indicate the longitudinal extension (measured in the advancing direction of the products) on which the conveyor 14 can realise a conveying action (and therefore of determining the advancing velocity of the products P) substantially independent from the dragging action of the conveyors 10 and 12 located upstream and downstream respectively.

In first approximation (not considering possible ballistic effects) it is reasonable to assume that, when a product P straddles two conveyors in cascade between conveyors 10, 12 and 14, the product P will generally tend to advance with a velocity primarily determined by the velocity of the conveyor on which the major part of its length is resting at the moment. Therefore, it follows that in succession on the advancing pathway of conveyor 10 to conveyor 14 and then to conveyor 12, each product P will fundamentally tend to follow a velocity profile such that its advancing velocity is initially given by the advancing velocity of conveyor 10, then shifting to the advancing velocity of conveyor 14 (a velocity which, as will be seen in the following, is selectively variable) and finally coinciding with the advancing velocity of conveyor 12.

Numeric references 16 and 18 indicate two sensor elements approximately located one at the upstream extremity and the other at the downstream extremity of the conveyor 14: the terms "upstream" and "downstream" naturally refer to the advancing direction of the products P (from left to right, in the annexed figures). In one form of embodiment, the sensors 16 and 18 are realised in the form of optic barriers, each of them including, according to known criteria, an emitter of radiation such as an LED projecting a beam of radiation directed toward a photo-detector (for example, a photodiode, phototransistor) in a direction transverse to the advancing direction of the products P.

The sensor 16 can detect (for example when the radiation beam of the optical barrier is "obscured") the fact that one or more products P are transiting in correspondence to the entrance extremity of the conveyor 14 and can emit a corresponding (first) signal. In dual mode, the sensor 18 can detect (also in this case when the radiation beam of the optical barrier is "obscured") the fact that one or more products P are transiting in correspondence to the exit extremity of the conveyor 14 and emit a corresponding (second) signal.

Therefore, the sensors 16 and 18 emit respective detection signals susceptible of assuming:
- a value of "light", readable, for example, as a logical "0", when no product P intercepts the beam of radiation in correspondence to the extremity of the conveyor 14 to which the sensor is associated; and
- a value of "dark" or "obscurity" readable as a logical "1", when at least one product P intercepts the radiation beam in correspondence to the extremity of the conveyor 14 to which the sensor is associated.

Naturally, the logical interpretation of the signals of sensors 16 and 18 can be complementary with respect to that referred to herein by way of example and in such case the logic of elaboration described in the following will be modified accordingly.

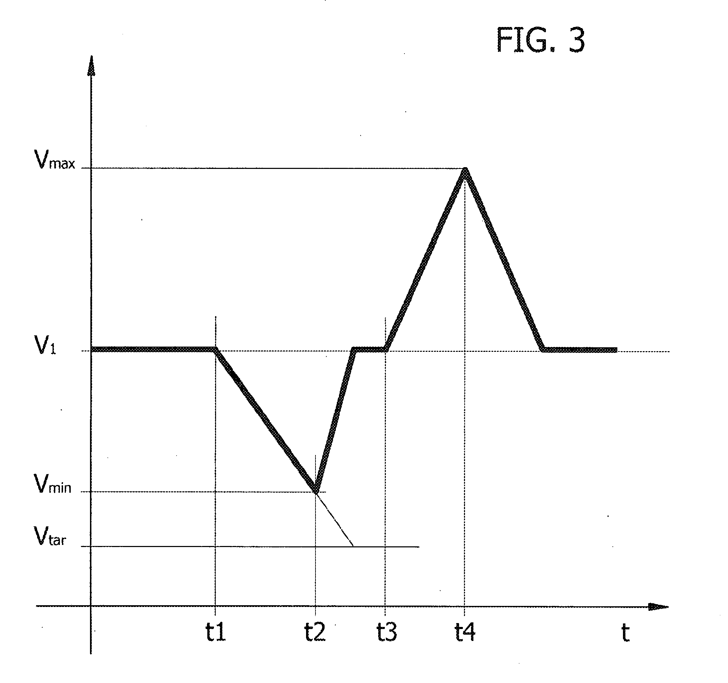

The signals of the sensors 16 and 18 are provided to a command unit 20 that acts on a motor 22 (for example, a brushless motor) that can give to the conveyor 14 (and therefore to the products P that are subjected to its conveying action at the moment) a "pendulated" law of velocity with respect to a value of basal or reference velocity of the type represented schematically in the diagram of figure 3. Such diagram represents the trend of the conveyor velocity when one of the ranks R of products P passes from the conveyor 10 to the conveyor 12 transiting on conveyor 14 and corresponds substantially to the implementation, by the command unit 20, of the following "truth table".

| Signal from sensor 16 | Signal from sensor 18 | Velocity of conveyor 14 | State |
|---|---|---|---|
| 1 | 0 | Decelerates | 1 |
| 1 | 1 | Basal | 2 |
| 0 | 1 | Accelerates | 3 |
| 0 | 0 | Basal | 4 |

Substantially, the above stated law of pendulation first involves a reduction or deceleration of the advancing velocity (without stopping) of the conveyor 14, followed - provided that specific conditions, better described in the following, are satisfied - by an increase or acceleration with successive returning to the basal value.

The global effect obtained is that of reducing the misalignment of the ranks by slowing down the movement of the products of the rank that are in the entering phase onto the conveyor 14 (so that the products that are "behind" in the rank R are pushed ahead by the entrance conveyor 10, while the conveyor 14 slows down the products that are "ahead" in the rank R itself) and, possibly, accelerating the movement of the products in the phase of exiting of the rank onto conveyor 14 (so that products that are "behind" in the rank R are once again pushed forward, this time by conveyor 14, while the exit conveyor 12 slows down the products that are "ahead" in the rank R itself.

The above-said pendular motion occurs around a basal velocity value (v1 in figure 3) that, for simplicity, is assumed here to correspond to the velocity of the conveyors 10 and 12.

Naturally, different choices are possible.

For example, as was previously stated, the advancing velocity of the exit conveyor 12 can be higher than the advancing velocity of the entrance conveyor 10. Solutions in which the conveyor 12 operates at a velocity that is lower with respect to that of conveyor 10 are also possible. In such situation, the effect of alignment of the ranks is even more efficacious, with an improvement also in the accumulating capacity ("buffer"), due to an improved compaction of the ranks. However, the application of such a working condition can require the designing of the space required for the insertion of successive conveyors with higher velocity so to restore the spacing value between the ranks to a value that is optimal for feeding the working stations located downstream (for example, wrapping).

Therefore, depending on the working condition adopted, the basal velocity of the conveyor 14 can be chosen, for example, to be equal to the velocity of the entrance conveyor 10, equal to the velocity of the exit conveyor 12, or equal to a value intermediate between the advancing velocity of the exit conveyor 12 and the advancing velocity of the entrance conveyor 10. In every, the specific choice of the basal velocity values v1 around which the variation mechanism (pendulousness) is realised, better described in the following, is not an essential element for the purpose of comprehension of the realisation of the solution described herein.

Referring for simplicity to the event of transit of the single rank (originally misaligned) in correspondence to the device 14, the truth table shown previously and the diagram of figure 3 correspond to the criteria described below.

When (instant t1 in the diagram in figure 3 - state 1 in the table) the sensor 16 located upstream detects - for example, emitting a logic of "1" - that the most "ahead" product P in a rank R upon arrival on the conveyor 10 is in correspondence to the entrance (upstream extremity) of the device 14, the command unit 20 acts on the motor 22, slowing down its velocity. In a form of embodiment, this slowing down of the basal velocity v1 occurs through a deceleration ramp, for example linear, so to arrive - at the end of the slowing down - at a velocity value vₘᵢₙ equal to approximately 50 - 60% of the basal velocity v1.

During this phase, since the velocity - slowed down - of the conveyor 14 is lower than the velocity of the conveyor 10, the products that are "behind" in the rank R are pushed forward by the entrance conveyor 10, while the conveyor 14 slows down the products that are "ahead" in the same rank R.

When (instant t2 in the diagram in figure 3 - state 2 in the table) the sensor 18 located downstream detects - for example emitting a logical "1" - that the product most "ahead" in the rank is in correspondence to the exit (downstream extremity) of the conveyor 10, the command unit 20 acts on the motor 22 so to restore the velocity of the device 14 to the basal value v1. As illustrated in figure 3, evidently this does not occur instantaneously, but with a ramp trend, usually more rapid with respect to the deceleration ramp.

This advancing condition up to the basal velocity v1 (state 2 in the table) is maintained until, with the downstream sensor 18 still obscured (logical signal "1"), the upstream sensor 16 reveals - for example, by emitting a logical signal "0" - that even the most "behind" product P in the rank has entered onto the conveyor 14.

When this occurs (instant t3 in the diagram in figure 3 - state 3 in the table), the unit 20 acts on the motor 22 imparting it with a velocity acceleration such to bring the velocity, for example, following a linear ramp, up to a value vₘₐₓ that is approximately 50% higher than the velocity value of v1.

During this phase, since the velocity - accelerated - of the conveyor 14 is higher than the velocity of conveyor 12, the products P that are "behind" in the rank R are once again pushed forward, this time by conveyor 14, while the exit conveyor 12 slows down the products that are "ahead" in the same rank R.

Finally, when (instant t4 in the diagram in figure 3 - state 4 in the table) the downstream sensor 16 reveals - for example by emitting a logical "0" - that even the product P most "behind" in the rank is exiting conveyor 14, the command unit 20 acts on the motor 22 so to restore the velocity of conveyor 14 to the basal value v1. Also in this case, figure 3 shows that evidently this does not occur instantaneously, but with a ramp trend, usually steeper with respect to the acceleration ramp.

This condition of advancing to the v1 basal velocity (state 4 in the table) is maintained until when, by effect of the arrival of a new rank of products at the entrance of conveyor 14, it returns to the conditions referred to as state 1 in the table.

In addition, it will be appreciated that if, for example, in the presence of especially short products P, conveyor 14 was appreciably longer than the products themselves, the passage from state 1 (slowing down) to state 3 (acceleration) of table 1 would occur passing though a condition analogous to state 4. Under such conditions, the "head" part of the rank could in fact arrive at the exit of conveyor 14 only after the "tail" part of the same rank has already passed the entrance of conveyor 14, so that, when all of the products in the rank are between the two sensors 16 and 18, the two sensors both generate a "light" signal (logical "0"). As seen, concerning the command of the velocity of the motor 22, states 2 and 4 in the table are equal (basal velocity v1), so that the functioning is analogous to that previously described.

It will also be appreciated that performance of the acceleration action starting from the instant t3 in the diagram in figure 3 (state 3 in the table) is conditioned by the fact that the upstream sensor 16 emits a logical "0", or, in any case, a signal indicating that the entire rank has actually passed onto conveyor 14 and that there are no products P located at the entrance of conveyor 14 itself.

In fact, it can occur that in the presence of highly "disordered" ranks entering onto the device 14, at the time in which the "tail" part of one rank has passed on to conveyor 14, the "head" part of the next rank is already at the entrance of the conveyor. In such conditions, the upstream sensor 16 continues to emit a corresponding signal (for example, a logical "1") and the above-said acceleration action is not performed. Under conditions of marked misalignment, such acceleration action would be susceptible of having a negative effect since being such to involve also the "head" products of the next rank, which would tend to be pulled ahead, leading to a worsening of the misalignment condition of the successive rank.

As was said, the product decelerating action performed by conveyor 14 is such not to involve the arrest of conveyor 14 itself; thus the risk that the products P would slide in an uncontrolled way on the conveyor system by effect of the abrupt deceleration is avoided.

It will also be appreciated that the velocity values vₘᵢₙ and/or vₘₐₓ can either be pre-fixed, or (as in the example of embodiment illustrated in figure 3) be determined by the duration of the intervals (t₁, t₂) and (t₃, t₄) which the head and tail parts of each rank require to traverse the distance included between the sensors. In the latter case, the values vₘᵢₙ and vₘₐₓ are essentially determined by the inclination of the deceleration/acceleration ramp that the command unit 20 sends to the motor 22.

As is represented in the leftmost part of the diagram in figure 3, the deceleration ramp can be directed toward achieving an objective or target velocity vₜₐᵣ that, though reduced (for example, two meters per minute), in any case, it is a non-zero velocity value. In this way, it is insured that the deceleration motion of the device 14 is in no case destined to cause the arrest, even temporarily, of the advancing motion of the ranks R.

It will also be appreciated that the acceleration and deceleration ramps of conveyor 14 can also be non-linear: for example, polynomial, cycloidal, sinusoid, etc.

Without prejudice to the underlying principle of the invention, the details and the embodiments may vary, even appreciably, with reference to what has been described herein by way of example only, without departing from the scope of the invention as defined by the annexed claims.

## Claims

1. A device for reducing the misalignment of ranks (R) of products (P) advancing on a conveyor line (10, 12), the device including:
- a conveyor (14) interposable in said conveyor line (10, 12), said conveyor being motorised (22) to convey said ranks of products (P) from an entrance to an exit of the conveyor (14) itself, **characterized in that** it comprises:
- a first sensing element (16) at the entrance of said conveyor (14), said first sensing element (16) for producing a first signal indicative of the fact that at least one of said products (P) is at the entrance of said conveyor (14),
- a second sensing element (18) at the exit of said conveyor (14), said second sensing element (18) for producing a second signal indicative of the fact that at least one of said products (P) is at the exit of said conveyor (14), and
- a control unit (20) of the motorisation (22) of said conveyor (14), said control unit (20) being sensitive to said first and said second signal and being configured to act on the motorisation (22) of said conveyor (14) for:
- reducing, without stopping, the velocity of said conveyor (14) with respect to a basal velocity (v1) when said first signal indicates that at least one product (P) of a rank is arriving at the entrance to said conveyor (14), and
- increasing the velocity of said conveyor (14) with respect to said basal velocity (v1) when said second signal indicates that at least one product (P) of said rank (R) is arriving at the exit of said conveyor (14) and said first signal indicates the absence of products (P) at the entrance of said conveyor (14).

2. A device according to claim 1, wherein said control unit (20) is configured to maintain the velocity of said conveyor (14) at said basal velocity (v1) when said first and said second signals indicate the absence of products (P) both at the entrance and the exit of said conveyor (14).

3. A device according to claim 1 or claim 2, wherein said control unit (20) is configured to reduce and/or increment the velocity of said conveyor (14) according to a velocity variation ramp.

4. A device according to claim 3, wherein said velocity variation ramp is a linear ramp.

5. A device according to claim 3, wherein said velocity variation ramp is a non-linear ramp.

6. A device according to any of the previous claims, wherein said control unit (20) is configured to reduce and/or increment the velocity of said conveyor (14) with a variation in velocity toward a target velocity.

7. A device according to claim 6, wherein, in the case of the reduction of velocity, said target velocity (vₜₐᵣ) is different from zero.

8. A device according to any of the previous claims, wherein said conveyor (14) is a belt conveyor.

9. A method for reducing the misalignment of ranks (R) of products (P) advancing on a conveyor line (10, 12), the method including the operation of:
- interposing in said conveyor line (10, 12) a conveyor (14) to convey said ranks of products (P) from an entrance to an exit of the conveyor (14) itself;
**characterized in that** it further includes the operations of:
- detecting the transit of products (P) at the entrance (16) of said conveyor (14) and at the exit (18) from said conveyor (14), and
- reducing, without stopping, the velocity of said conveyor (14) with respect to a basal velocity (v1) when at least one product (P) of a rank is arriving at the entrance of said conveyor (14), and
- incrementing the velocity of said conveyor (14) with respect to said basal velocity (v1) when at least one product (P) of the above-said rank (R) is arriving at the exit of said conveyor (14), in the absence of products (P) at the entrance of said conveyor (14).

10. A method according to claim 9, including the operation of maintaining the velocity of said conveyor (14) at said basal velocity (v1) in the absence of products (P) at both the entrance or the exit of said conveyor (14).

## Patentansprüche

1. Vorrichtung zur Reduzierung der Fehlausrichtung von Gruppierungen (R) von Produkten (P) welche auf einer Förderstrecke (10, 12) befördert werden, wobei die Vorrichtung umfasst:
eine Fördereinrichtung (14), zum Einbau in der Förderstrecke (10, 12), wobei die Fördereinrichtung motorisiert (22) ist, um die Gruppierungen von Produkten (P) von einem Eingang zu einem Ausgang der Fördereinrichtung (14) selbst zu befördern, **dadurch gekennzeichnet, dass** sie umfasst:
ein erstes Abtastelement (16) an dem Eingang der Fördereinrichtung (14), wobei das erste Abtastelement (16) zum Erzeugen eines ersten Signals dient, welches die Tatsache anzeigt, dass wenigstens eines der Produkte (P) sich an dem Eingang der Fördereinrichtung (14) befindet,
ein zweites Abtastelement (18) an dem Ausgang der Fördereinrichtung (14), wobei das zweite Abtastelement (18) dem Erzeugen eines zweiten Signals dient, welches die Tatsache anzeigt, dass wenigstens eines der Produkte (P) sich an dem Ausgang der Fördereinrichtung (14) befindet, und
eine Steuerungseinheit (20) der Motorisierung (22) der Fördereinrichtung (14), wobei die Steuerungseinheit (20) auf das erste und zweite Signal anspricht und konfiguriert ist, auf die Motorisierung (22) der Förderereinrichtung (14) einzuwirken, zum:
Reduzieren, ohne zu stoppen, der Geschwindigkeit der Fördereinrichtung (14) hinsichtlich einer Grundgeschwindigkeit (v1), wenn das erste Signal anzeigt, dass wenigstens ein Produkt (P) einer Gruppierung an dem Eingang zu der Fördereinrichtung (14) ankommt, und
Erhöhen der Geschwindigkeit der Fördereinrichtung (14), hinsichtlich der Grundgeschwindigkeit (v1), wenn das zweite Signal anzeigt, dass wenigstens ein Produkt (P) der Gruppierung (R) an dem Ausgang der Fördereinrichtung (14) ankommt, und das erste Signal die Abwesenheit von Produkten (P) an dem Eingang der Fördereinrichtung (14) anzeigt.

2. Vorrichtung nach Anspruch 1, wobei die Steuerungseinheit (20) konfiguriert ist, die Geschwindigkeit der Fördereinrichtung (14) bei der Grundgeschwindigkeit (v1) beizubehalten, wenn die ersten und die zweiten Signale die Abwesenheit von Produkten (P) an dem Eingang und dem Ausgang der Fördereinrichtung (14) anzeigen.

3. Vorrichtung nach Anspruch 1 oder 2, wobei die Steuerungseinheit (20) konfiguriert ist, die Geschwindigkeit der Fördereinrichtung (14) zu reduzieren und/oder inkrementieren gemäß einer Geschwindigkeitsvariationsrampe.

4. Vorrichtung nach Anspruch 3, wobei die Geschwindigkeitvariationsrampe eine lineare Rampe ist.

5. Vorrichtung nach Anspruch 3, wobei die Geschwindigkeitsvariationsrampe eine nichtlineare Rampe ist.

6. Vorrichtung nach einem der vorangehenden Ansprüche, wobei die Steuerungseinheit (20) konfiguriert ist, die Geschwindigkeit der Fördereinrichtung (14) mit einer Variation der Geschwindigkeit zu einer Zielgeschwindigkeit zu reduzieren und/oder inkrementieren.

7. Vorrichtung nach Anspruch 6, wobei, im Fall der Reduzierung der Geschwindigkeit, die Zielgeschwindigkeit (vₜₐᵣ) verschieden von null ist.

8. Vorrichtung nach einem der vorangehenden Ansprüche, wobei die Fördereinrichtung (14) ein Bandförderer ist.

9. Verfahren zum Reduzieren der Fehlausrichtung von Gruppierungen (R) von Produkten (P), welche auf einer Förderstrecke (10, 12) befördert werden, wobei das Verfahren den Betrieb umfasst:
eines Einfügens, in die Förderstrecke (10, 12) einer Fördereinrichtung (14), um die Gruppierungen von Produkten (P) von einem Eingang zu einem Ausgang der Fördereinrichtung (14) selbst zu befördern, **dadurch gekennzeichnet, dass** es ferner den Betrieb umfasst:
eines Detektierens des Durchquerens von Produkten (P) an dem Eingang (16) der Fördereinrichtung (14) und an dem Ausgang (18) aus der Fördereinrichtung (14), und
eines Reduzierens, ohne zu stoppen, der Geschwindigkeit der Fördereinrichtung (14) hinsichtlich einer Grundgeschwindigkeit (v1), wenn wenigstens ein Produkt (P) einer Gruppierung an dem Eingang der Fördereinrichtung (14) ankommt, und
eines Inkrementierens der Geschwindigkeit der Fördereinrichtung (14) hinsichtlich der Grundgeschwindigkeit (v1), wenn wenigstens ein Produkt (P) der oben genannten Gruppierung (R) an dem Ausgang der Fördereinrichtung (14) ankommt, in der Abwesenheit von Produkten (P) an dem Eingang der Fördereinrichtung (14) .

10. Verfahren nach Anspruch 9, welches den Betrieb des Beibehaltens der Geschwindigkeit der Fördereinrichtung (14) bei der Grundgeschwindigkeit (v1) umfasst, in der Abwesenheit von Produkten (P) an beiden, dem Eingang oder dem Ausgang, der Fördereinrichtung (14).

## Revendications

1. Dispositif pour réduire le défaut d'alignement de rangs (R) de produits (P) avançant sur une chaîne de transporteur (10, 12), le dispositif comprenant :
- un transporteur (14) pouvant être intercalé sur ladite chaîne de transporteur (10, 12), ledit transporteur étant motorisé (22) pour transporter lesdits rangs de produits (P) d'une entrée à une sortie du transporteur (14) même, **caractérisé en ce qu'**il comprend :
- un premier élément de détection (16) à l'entrée dudit transporteur (14), ledit premier élément de détection (16) pour produire un premier signal indiquant qu'au moins l'un desdits produits (P) se trouve à l'entrée dudit transporteur (14),
- un deuxième élément de détection (18) à la sortie dudit transporteur (14), ledit deuxième élément de détection (18) pour produire un deuxième signal indiquant qu'au moins l'un desdits produits (P) se trouve à la sortie dudit transporteur (14), et
- une unité de commande (20) de la motorisation (22) dudit transporteur (14), ladite unité de commande (20) étant sensible audit premier signal et audit deuxième signal et étant configurée pour agir sur la motorisation (22) dudit transporteur (14) pour :
- réduire, sans procéder à un arrêt, la vitesse dudit transporteur (14) par rapport à une vitesse de base (v1) lorsque ledit premier signal indique qu'au moins un produit (P) d'un rang est en train d'arriver à l'entrée dudit transporteur (14), et
- augmenter la vitesse dudit transporteur (14) par rapport à ladite vitesse de base (v1) lorsque ledit deuxième signal indique qu'au moins un produit (P) dudit rang (R) est en train d'arriver à la sortie dudit transporteur (14) et ledit premier signal indique l'absence de produits (P) à l'entrée dudit transporteur (14).

2. Dispositif selon la revendication 1, dans lequel ladite unité de commande (20) est configurée pour maintenir la vitesse dudit transporteur (14) à ladite vitesse de base (v1) lorsque ledit premier signal et ledit deuxième signal indiquent l'absence de produits (P) à la fois à l'entrée et à la sortie dudit transporteur (14).

3. Dispositif selon la revendication 1 ou la revendication 2, dans lequel ladite unité de commande (20) est configurée pour réduire et/ou augmenter la vitesse dudit transporteur (14) en fonction d'une rampe de variation de vitesse.

4. Dispositif selon la revendication 3, dans lequel ladite rampe de variation de vitesse est une rampe linéaire.

5. Dispositif selon la revendication 3, dans lequel ladite rampe de variation de vitesse est une rampe non linéaire.

6. Dispositif selon l'une quelconque des revendications précédentes, dans lequel ladite unité de commande (20) est configurée pour réduire et/ou augmenter la vitesse dudit transporteur (14) avec une variation de vitesse vers une vitesse cible.

7. Dispositif selon la revendication 6, dans lequel, dans le cas de la réduction de vitesse, ladite vitesse cible (Vₜₐᵣ) est différente de zéro.

8. Dispositif selon l'une quelconque des revendications précédentes, dans lequel ledit transporteur (14) est un transporteur à bande.

9. Procédé pour réduire le défaut d'alignement de rangs (R) de produits (P) avançant sur une chaîne de transporteur (10, 12), le procédé comprenant l'étape consistant à :
- intercaler, sur ladite chaîne de transporteur (10, 12), un transporteur (14) pour transporter lesdits rangs de produits (P) d'une entrée à une sortie du transporteur (14) même ;
**caractérisé en ce qu'**il comprend, en outre, les opérations consistant à :
- détecter le transit de produits (P) à l'entrée (16) dudit transporteur (14) et à la sortie (18) dudit transporteur (14), et
- réduire, sans procéder à un arrêt, la vitesse dudit transporteur (14) par rapport à une vitesse de base (v1) lorsqu'au moins un produit (P) d'un rang est en train d'arriver à l'entrée dudit transporteur (14), et
- augmenter la vitesse dudit transporteur (14) par rapport à ladite vitesse de base (v1) lorsqu'au moins un produit (P) dudit rang (R) ci-dessus est en train d'arriver à la sortie dudit transporteur (14), en l'absence de produits (P) à l'entrée dudit transporteur (14).

10. Procédé selon la revendication 9, comprenant l'opération consistant à maintenir la vitesse dudit transporteur (14) à ladite vitesse de base (v1) en l'absence de produits (P) à la fois à l'entrée ou à la sortie dudit transporteur (14).
